# EUROPEAN PATENT APPLICATION

(11) **EP 0 964 499 A1**
(43) Date of publication of application: **15.12.1999**
(21) Application number: 99201341.7
(22) Date of filing: 29.04.1999
(51) Int. Cl.: H02K 5/132, F04D 13/02

(54) **Assembly of dredge pump and electric motor for driving said dredge pump**

(30) Priority: 12.06.1998 NL 1009384
(71) Applicant: IHC HOLLAND N.V., NL-3361 EP Sliedrecht (NL)
(72) Inventor: Claassen, Lucien Josephus Maria, 4617 ME Bergen op Zoom (NL)
(74) Representative: Lips, Hendrik Jan George, Ir.

(57) **Abstract**

Assembly of a dredge pump (1) and an electric motor (2) directly coupled to it for driving it. The motor (2) is designed as a completely closed electric motor with its rotor (13) having an axially directed, annular slot (15) spaced from the axis (14) of the motor. At least the inner surfaces (16) of said slot are of magnetizable material, with electromagnetic coils (17) situated opposite said inner (16) surfaces and connected to the stator (18) which to that end is provided with a circumferentially extending rib (19). The coils (17) are fed through a cable (20) which is passed waterproof through the wall (21) of the housing (5) of the motor. The shaft (3) of said motor (2) extends through a connecting element (7) being provided with at least one base (8) for mounting said assembly onto the ladder of a dredge or into the suction line of a hopper dredge.

## Description

The invention relates to an assembly of a dredge pump and an electric motor directly coupled to it for driving it.

Such an assembly is mounted to the free end of a ladder pivotably connected to a floating dredge, at the same time serving to support the suction line extending from said floating dredge to said dredge pump. The assembly can also be built into the suction line of a hopper dredge.

The weight of the assembly of dredge pump and drive motor is situated at the end of the ladder or of the suction line per se so that the parts concerned will have to be dimensioned for it. This also holds for the cables and winches by which the end of the ladder or of the suction line can be moved downwards and upwards when using said assembly.

The object of the invention is to reduce the weight of the assembly as far as possible. In connection to the above, this can provide considerable advantages.

According to the invention this is achieved, in that the motor is designed as a completely closed electric motor with its rotor having an axially directed, annular slot spaced from the axis of the motor, at least the inner surfaces of said slot being of magnetizable material, with electromagnetic coils situated opposite said inner surfaces connected to the stator which to that end is provided with a circumferentially extending rib, said coils being fed through a cable which is passed waterproof through the wall of the housing of the motor.

It has turned out that the weight of the electric motor according to the invention can be reduced by half or even more in relation to the known motors.

According to a preferred embodiment, the motor shaft, beyond its closed-off part, will extend through a connecting element, which is also connected to the dredge pump, said connecting element being provided with at least one base for mounting said assembly onto the ladder of a dredge or into the suction line of a hopper dredge.

The invention is further explained by way of an embodiment, shown in the drawing, in which:

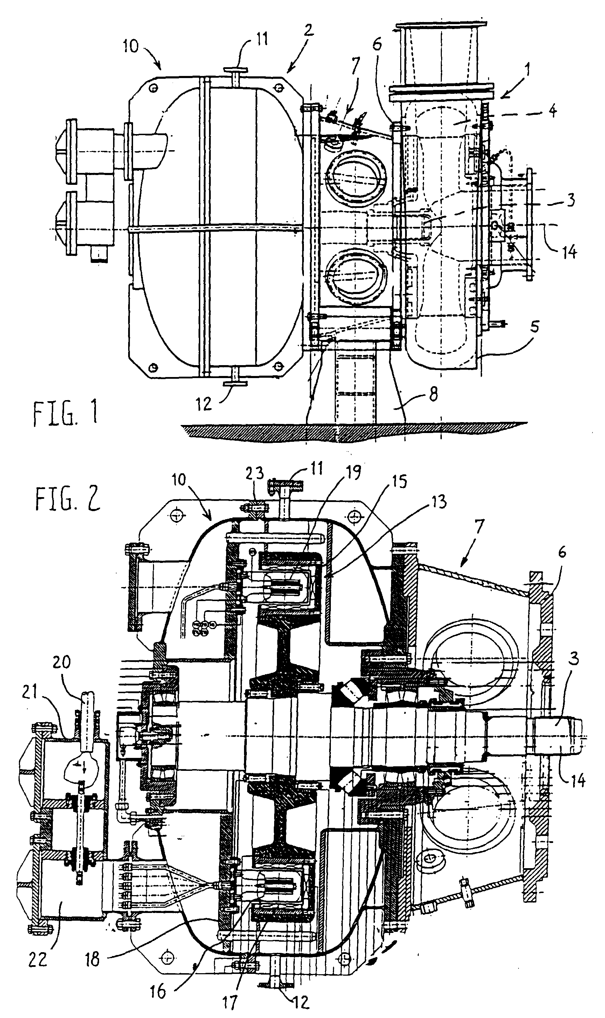

Fig. 1 shows a side elevation of an assembly according to the present invention, used with a dredge pump mounted on a ladder; and
Fig. 2 shows a cross-section, on an enlarged scale, across an electric motor for use with the assembly according to Fig. 1.

The drawing shows a dredge pump 1 which is driven by an electric motor 2 in that the shaft 3 of the latter is connected with the impeller 4 situated in the housing 5 of said pump 1.

The housing 5 of said pump 1 is connected to a flange 6 of a connecting element 7. In this case, the connecting element 7 is provided with a base 8 that can be connected to the ladder 9 of a dredge, said ladder being indicated only schematically.

The other side of said connecting element 7 is connected to a housing portion 10 of the electric motor 2, in which housing portion 10 the shaft 3 is rotatably supported by means of a number of bearings not described in detail. Due to this, the axially directed forces exerted on the shaft 3 by the impeller 4 of said pump 1 can also be absorbed. At the bearings, sealing means for passing the shaft 3 waterproof through the end walls of the housing portion 10 are provided.

Said housing portion 10 is completely closed-off outwardly and can be filled with oil for cooling the electric motor and for lubrication of the bearings supporting the shaft 3. To this end, the housing portion 10 is provided with a filling connection 11 and with a draining connection 12.

The rotor 13 is connected to the shaft 3 of the electric motor 2, said rotor being provided with a slot 15 radially spaced from the motor axis 14, said slot having at least inner surfaces 16 of magnetizable material. Opposite the inner surfaces 16 are electromagnetic coils 17 being part of the stator 18 having a circumferential rib 19 to that end. The coils 17 are fed through a cable 20 which is passed waterproof through the wall 21 of a distribution chamber 22 and within said chamber 21 it is branched to the various coils 17. It will be obvious that the distance between the coils 17 of the stator 18 and the inner surfaces 16 of the slot 15 of the rotor 13 is kept as small as possible in order to render the motor efficiency optimal.

In connection to the mounting of the motor the housing portion 10 will consist of two parts which will be connected to each other by flanges 23.

When the dredge pump with motor should be mounted in the suction line of a hopper dredge, the connecting element 7 will be designed in a somewhat different way than it is indicated in the drawing.

Thus, it will be obvious, that only one single possible embodiment of an assembly according to the invention is illustrated in the drawing and described above and that many modifications can be made without leaving the inventive idea as it is indicated in the claims.

Therefore, it is naturally possible to change the parts connected to the stator and rotor, thus providing the rotor with a rib and providing the stator with the slot with the coils on its inner wall. Owing to this, mounting of the latter will in effect be less simple.

## Claims

1. Assembly of a dredge pump (1) and an electric motor (2) directly coupled to it for driving it, characterized in that the motor (2) is designed as a completely closed electric motor with its rotor (13) having an axially directed, annular slot (15) spaced from the axis (14) of the motor, at least the inner surfaces (16) of said slot being of magnetizable material, with electromagnetic coils (17) situated opposite said inner (16) surfaces and connected to the stator (18) which to that end is provided with a circumferentially extending rib (19), said coils (17) being fed through a cable (20) which is passed waterproof through the wall (21) of the housing (5) of the motor.

2. Assembly according to claim 1, characterized in that the shaft (3) of said motor (2), beyond its closed-off part, extends through a connecting element (7), which is also connected to the dredge pump (1), said connecting element being provided with at least one base (8) for mounting said assembly onto the ladder (9) of a dredge or into the suction line of a hopper dredge.
